Europäisches Patentamt

European Patent Office

Office européen des brevets

(11) Veröffentlichungsnummer: **0 448 953 A2**

## (12) EUROPÄISCHE PATENTANMELDUNG

(21) Anmeldenummer: 91102320.8

(22) Anmeldetag: 19.02.91

(51) Int. Cl.⁵: **B29C 47/32**

(30) Priorität: 28.03.90 DE 4009917

(43) Veröffentlichungstag der Anmeldung:
02.10.91 Patentblatt 91/40

(84) Benannte Vertragsstaaten:
DE FR GB IT

(71) Anmelder: PAUL TROESTER
MASCHINENFABRIK
Am Brabrinke 2-4
W-3000 Hannover 81(DE)

(72) Erfinder: Baumgarten, Wilfried, Dipl.-Ing.
Stettiner Strasse 17
W-3017 Pattensen(DE)

(74) Vertreter: Junius, Walther, Dr.
Wolfstrasse 24
W-3000 Hannover-Waldheim(DE)

(54) Aus Extruder und Kalander bestehende Fertigungsvorrichtung für Platten und oder Folien aus Kunststoff oder Kautschukmischungen.

(57) Die Erfindung betrifft eine aus Extruder und Kalander bestehende Fertigungsvorrichtung für Platten und/oder Folien aus Kunststoff oder Kautschukmischungen, bei der der Extruder mit einem die zu extrudierende Masse in die Breite verteilenden Spritzkopf versehen ist, dessen Ausformleisten abnehmbar montiert sind. Es ist die Aufgabe der Erfindung, eine einfache Möglichkeit an einer aus Extruder und Kalander bestehenden Fertigungsvorrichtung zu schaffen, um ohne Austausch von Leistenpaaren eine Veränderung der Berührungslänge des Knets am Walzenumfang zu erreichen. Die Erfindung besteht darin, daß entweder der Extruder oder ein Kalander horizontal unbeweglich aufgestellt sind, und daß zwischen dem Extruder und dem Kalander eine Kopplungsvorrichtung angeordnet ist, die eine fein einstellbare Abstandsänderung zwischen Extruder und Kalander derart ermöglicht, daß der Abstand der Ausformleisten von den Walzen des Kalanders im Walzenspalt von einem Minimalwert, bei dem die Ausformleisten fast an den Walzen anliegen, auf einen Maximalwert änderbar ist, bei dem die Ausformleisten auch außerhalb des Walzenspaltes befindlich sein können.

EP 0 448 953 A2

Die Erfindung betrifft eine aus Extruder und Kalander bestehende Fertigungsvorrichtung für Platten und/oder Folien aus Kunststoff oder Kautschukmischungen, bei der der Extruder mit einem die zu extrudierende Masse in die Breite verteilenden Spritzkopf versehen ist, dessen Ausformleisten abnehmbar montiert sind.

Seit vielen Jahrzehnten werden aus Extruder und Kalander bestehende Fertigungsvorrichtungen für die Herstellung von Platten und/oder Folien aus Kunststoff oder Kautschukmischungen benutzt. Wird der Spritzkopf von einem völlig homogenen und aufgeschlossenen Extrudat geeigneter Temperatur verlassen, dient der Kalander lediglich als Glätt-, Kühl- und/oder Kalibriervorrichtung. In diesem Falle befindet sich im Walzenspalt des Kalanders vor der engsten Stelle dieses Spaltes lediglich eine geringfügige Aufwölbung des Extrudates durch vor der engsten Stelle des Walzenspaltes aufgestautes Extrudat. Da Kalander aber ebenso wie Extruder die Arbeiten des Mischens, Homogenisierens, Aufschließens und Temperierens ausführen können, wenn sich im Walzenspalt vor der engsten Stelle dieses Spaltes ein erheblicher Materialstau bildet, der in diesem Walzenspalt eigene Rotationsbewegungen ausführt und dabei geknetet wird, weshalb dieses hier angestaute Material auch als Knet bezeichnet wird, können in Extruder-Kalander-Kombinationen auch Extruder verwendet werden, die das Material nicht vollständig homogenisieren, mischen und aufschließen, sondern einen Teil dieser Arbeiten dem Kalander überlassen.

Die Bildung und die Größe eines im Walzenspalt befindlichen Knets ist allein abhängig von verfahrenstechnischen Maßnahmen, nämlich von dem Verhältnis der Menge des dem Walzenspalt zugeführten extrudierten Materials zu der eingestellten Größe des Walzenspaltes und der Drehgeschwindigkeit der Walzen. Bei der Fertigung wird im Anlaufvorgang die Größe des sich bildenden Knets eingestellt und während der Fertigung wird durch Regelung eines der genannten Parameter die für das Produkt gewünschte Größe des Knets aufrecht erhalten.

Im Gegensatz hierzu ist die Dicke der hergestellten Platte oder Folie sehr weitgehend abhängig von der Spaltweite des Spritzkopfmundes. Daher werden Spritzköpfe seit vielen Jahrzehnten mit auswechselbaren und/oder einstellbaren Ausformleisten hergestellt, damit unterschiedlich dicke Platten oder Folien hergestellt werden können. Die Abnehmbarkeit der Ausformleisten hat aber auch noch einen weiteren Grund: Für die Masseverteilung in die Breite müssen die Wandungen der Fließwege des Extrudates im Spritzkopf bestimmte Formen haben, die sich nicht immer rein theoretisch bestimmen lassen. Daher müssen die Fließwege für das Extrudat bei Probeläufen der Fertigungsvorrichtung oftmals noch geändert werden. Um nicht die schweren Spritzkopfteile auf Nachbearbeitungsmaschinen aufspannen zu müssen, sind die Ausformleisten abnehmbar montiert, damit allein die Ausformleisten ohne die übrigen Spritzkopfteile auf die Nachbearbeitungsmaschinen gespannt werden können. Auch bei Materialwechsel der Produktionsanlage kann ein Austausch der Leisten erforderlich sein.

Um die Berührungsflächen der Walzen mit dem Knet und damit die im Walzenspalt geleistete Aufschließ-, Misch- und Homogenisierungsarbeit verändern zu können, ist es aus der DE-OS 24 50 225 bekannt geworden, Ausformleistenpaare gegen andere Ausformleistenpaare, die länger oder kürzer in den Walzenspalt hereinragen, austauschbar zu machen. Diese austauschbaren Ausformleistenpaare können auch unterschiedliche Spaltweiten für den Durchtritt des zu extrudierenden Materials aufweisen. Diese Maßnahme hat aber erhebliche Nachteile: Macht sie es doch erforderlich, daß für den Austausch von Ausformleistenpaaren die Maschine angehalten werden muß, Kalander und Extruder auseinandergefahren werden müssen und erst dann der Austausch vorgenommen werden kann. Eine kontinuierliche Veränderung während des Betriebes ist hier nicht möglich.

Die vorliegende Erfindung vermeidet die Nachteile des Standes der Technik. Es ist die Aufgabe der Erfindung, eine einfache Möglichkeit an einer aus Extruder und Kalander bestehenden Fertigungsvorrichtung zu schaffen, um ohne Austausch von Leistenpaaren eine Veränderung der Berührungslänge des Knets am Walzenumfang zu erreichen.

Die Erfindung besteht darin, daß bei der Ausführung, bei der der Extruder oder der Kalander horizontal beweglich aufgestellt ist, zwischen dem Extruder und dem Kalander eine Kopplungsvorrichtung angeordnet ist, die eine fein einstellbare Abstandsänderung zwischen Extruder und Kalander derart ermöglicht, daß der Abstand der Ausformleisten von den Walzen des Kalanders im Walzenspalt von einem Minimalwert, bei dem die Ausformleisten fast an den Walzen anliegen, auf einen Maximalwert änderbar ist, bei dem die Ausformleisten auch außerhalb des Walzenspaltes befindlich sein können.

Diese Kopplungsvorrichtung kann während des Extruderbetriebes verstellt werden, so daß ohne einen Wechsel der Ausformleisten die Berührungsfläche des Knets mit den Kalanderwalzen kontinuierlich veränderbar ist. Auf diese Weise gelingt es, optimale Produktionsverhältnisse und damit optimale Produkte herzustellen. Diese Einstellung ist ohne Produktionsunterbrechung in einfacher Weise möglich. Das führt dazu, daß die Bedienungsmannschaft der aus Extruder und Kalander bestehenden Fertigungsvorrichtung diese Möglichkeit der Einstellung des Knetes auch nutzt.

Baulich läßt sich diese Kopplungsvorrichtung sehr einfach dadurch herstellen, daß die Kopplungsvorrichtung aus einer Gewindespindel besteht. Diese läßt eine kontunuierliche Veränderung der Eintauchtiefe der Ausformleisten in den Walzenspalt zu.

Zweckmäßig ist es, wenn noch eine weitere Kopplungsvorrichtung zwischen Extruder und Kalander angeordnet ist, um eine Feineinstellung nicht nur in einer Dimension vorzunehmen, sondern Extruder mit Breitspritzkopf zum Kalander auch optimal ausrichten zu können.

Für manche Anwendungsfälle kann es zweckmäßig sein, wenn eine Verstellung auch in der vertikalen Dimension möglich ist. Das kann dadurch erreicht werden, daß der horizontal beweglich oder der unbeweglich aufgestellte Teil vertikal verstellbar ist.

Zweckmäßig ist es, wenn der horizontal beweglich aufgestellte Teil mit Vorrichtungen zur Blockierung der Beweglichkeit versehen ist. Nach der Einstellung eines optimalen Knets werden diese Vorrichtungen zur Blockierung in Tätigkeit gesetzt, um die Einstellung zu fixieren und die Kopplungsvorrichtung zu entlasten.

Bei der vertikalen Verstellmöglichkeit kann es zweckmäßig sein, wenn die Kopplungsvorrichtung an dem unbeweglichen Aggregat (Kalander oder Extruder) an dessen Fundament angebracht ist.

Um die Spaltbreite weiterhin veränderlich machbar zu gestalten, ist es zweckmäßig, wenn eine Leiste oder ein Leistenpaar gegen eine andere bzw. ein anderes mit unterschiedlicher Spaltweite austauschbar ist.

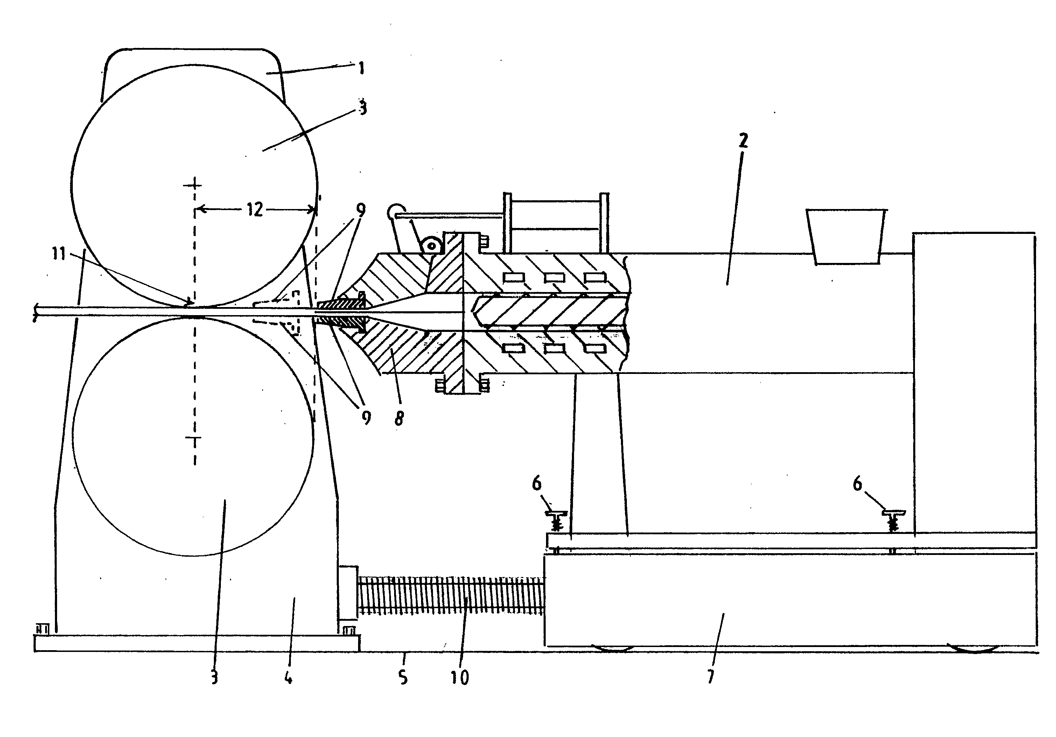

Das Wesen der Erfindung ist nachstehend anhand eines in der Zeichnung schematisch dargestellten Ausführungsbeispieles näher erläutert. Die Zeichnung zeigt eine schematische Darstellung der Fertigungsvorrichtung.

Die Fertigungsvorrichtung besteht aus einem Kalander 1 und einem Extruder 2. Die die Kalanderwalzen 3 tragenden Ständer 4 sind fest auf dem Boden 5 montiert. Der Extruder 2 ist mittels der verstellbaren Füße 6 auf einem auf dem Boden 5 verschiebbaren Fahrrahmen 7 aufgebaut. Sein Spritzkopf 8 ist mit abnehmbaren Leisten 9 versehen, die bei Spaltweiteänderungen auch austauschbar sind. Der Kalanderständer 4 ist mittels eines Paares von Spindeln 10 mit dem Fahrrahmen 7 verbunden, so daß der Fahrrahmen 7 und damit auch der Extruder 2 und damit auch die Leisten 9 in einen unterschiedlichen Abstand von der engsten Stelle 11 des Walzenspaltes 12 verschoben werden können. Und zwar von einer gestrichelt dargestellten Minimalstellung in die mit ausgezogenen Linien dargestellte Maximalstellung.

Der Walzenspalt erstreckt sich von der engsten Stelle zwischen den Walzen bis zu der den beiden Walzen gemeinsamen Tangente.

Liste der Bezugszeichen:

| | |
|---|---|
| 1 | Kalander |
| 2 | Extruder |
| 3 | Kalanderwalzen |
| 4 | Ständer |
| 5 | Boden |
| 6 | Fuß |
| 7 | Fahrrahmen |
| 8 | Spritzkopf |
| 9 | Leiste |
| 10 | Spindel |
| 11 | engste Stelle |
| 12 | Walzenspalt |

**Patentansprüche**

1. Aus Extruder und Kalander bestehende Fertigungsvorrichtung für Platten und/oder Folien aus Kunststoff oder Kautschukmischungen, bei der der Extruder mit einem die zu extrudierende Masse in die Breite verteilenden Spritzkopf versehen ist, dessen Ausformleisten abnehmbar montiert sind, wobei entweder der Extruder oder der Kalander horizontal unbeweglich aufgestellt sind, dadurch gekennzeichnet, daß zwischen dem Extruder (2) und dem Kalander (1) eine Kopplungsvorrichtung (10) angeordnet ist, die eine fein einstellbare Abstandsänderung zwischen Extruder (2) und Kalander (1) derart ermöglicht, daß der Abstand der Ausformleisten (9) von den Walzen (3) des Kalanders (1) im Walzenspalt von einem Minimalwert, bei dem die Ausformleisten (9) fast an den Kalanderwalzen (3) anliegen, auf einen Maximalwert änderbar ist.

2. Fertigungsvorrichtung nach Anspruch 1, dadurch gekennzeichnet, daß die Kopplungsvorrichtung aus einer Gewindespindel (10) besteht.

3. Fertigungsvorrichtung nach Anspruch 1, dadurch gekennzeichnet, daß eine weitere Kopplungsvorrichtung (10) zwischen Extruder (2) und Kalander (1) angeordnet ist.

4. Fertigungsvorrichtung nach Anspruch 1, dadurch gekennzeichnet, daß der horizontal beweglich aufgestellte Teil mit Vorrichtungen zur Blockierung seiner Beweglichkeit versehen ist.

5. Fertigungsvorrichtung nach Anspruch 1,
dadurch gekennzeichnet,
daß entweder der Kalander oder der Extruder
vertikal verstellbar ist.

6. Fertigungsvorrichtung nach Anspruch 1 und 5,
dadurch gekennzeichnet,
daß die Kopplungsvorrichtung an dem unbeweglichen Aggregat (Kalander (1) oder Extruder (2)) an dessen Ständer, Grundplatte oder
Fahrrahmen (7) angebracht ist.

7. Fertigungsvorrichtung nach Anspruch 1,
dadurch gekennzeichnet,
daß eine Leiste (9) oder ein Leistenpaar gegen
eine andere bzw. ein anderes mit unterschiedlicher Spaltweite austauschbar ist.

8. Verwendung einer Kopplungsvorrichtung (10)
zwischen dem Kalander (1) und dem Extruder
(2) bzw. dessen Ständer, Grundplatte oder
Fahrrahmen (7), zur Feineinstellung der Eintauchtiefe der Leisten (9) in den Walzenspalt
oder Kalanderwalzen (3).

9. Verwendung der Beweglichkeit des beweglichen Teiles einer aus Extruder und Kalander
bestehenden Fertigungsvorrichtung zur Einstellung des Abstandes der Düsenlippen von den
Walzen im Walzenspalt und Anordnung oder
Verwendung einer Feststellvorrichtung am beweglichen Teil für die Fixierung der Einstellung
des Abstandes.